# EUROPEAN PATENT APPLICATION

(11) **EP 4 080 300 A1**
(43) Date of publication of application: **26.10.2022**
(21) Application number: 21169207.4
(22) Date of filing: 19.04.2021
(51) Int. Cl.: G05B 19/404, B24B 49/18, B24B 27/00, B24B 9/06, B24B 47/22, B24B 49/12, B24B 51/00

(54) **DEVICE AND PROCESSING PROCEDURE OF STONE MATERIAL**

(71) Applicant: Previti, Antonino, 56125 PISA (PI) (IT)
(72) Inventor: Previti, Antonino, 56125 PISA (PI) (IT)
(74) Representative: Lunati & Mazzoni S.r.L.

(57) **Abstract**

It is provided a processing procedure (100) of an object (1a) in stone material and defining final profile (1c), the process (100) comprises: a work station of said object (1a); tools (2) configured to process the object (1a) and defining a removal thickness (2b); a block for reciprocal movement between object (1a) and tool (2); a drive block control unit; an acquisition step (20) wherein the acquisition system acquires the current cutting profile (2c) of each tool (2); an evaluation step (30) wherein for each tool (2) an offset is determined between object (1a) and tool (2) as a function of the final profile (1c), removal thickness (2b) and current cutting profile (2c); and at least one processing step wherein the movement block reciprocally moves object (1a) and tool (2) defining said offset.

## Description

The present invention relates to a device and processing procedure of stone material of the type specified in the preamble of the first claim, preferably by shaving removal.

As noted, stone materials are fragments of rock, of variable dimensions and of a more or less regular shape. The major examples of stone materials are granite, or nature of silicate rocks resistant, polishable, and marbles or rather compact carbonate rocks of nature, polishable (marble, calcschist; compact limestone)

To this day, the processing of stone materials involves the use of a usually diamond wheel sets. The set is composed on average of seven / eight wheels having a cutting profile that reflects in negative the profile to be performed during processing. Typically, the set includes four "coarse grained" diamond wheels and three polishing diamond wheels.

The wheels are mounted on a generally CNC machine that uses them in sequence to remove material with a progressively decreasing thickness until polishing wherein almost no material is removed (at most a few hundredths of a mm).

The machine positions the tools with a decreasing offset (distance between the profile to be made and the cutting profile of the tool) so as to ensure that the tool removes the correct amount of material along the entire profile of the workpiece. An example is described in EP2542381.

The known art described includes some important drawbacks.

In particular, the calculation of the offset along the entire profile, defined by the operator on the basis of the knowledge of the machine and the type of processing that each grinding wheel performs, must be performed in an extremely precise manner.

In fact, a reduced offset determines an excess removal of the tool that wears quickly and, in some cases, can break.

On the other hand, an excess of offset of one or more tools of the set can lead to a non-processing of part of the profile. This aspect can translate into a poor quality at the end of the work of this part of the profile or in an excess of removal of the next tool that wears quickly and, in some cases, can break.

Another drawback is that the manufacturing process is particularly slow and expensive.

This drawback is accentuated by the aforementioned drawback, in fact the operator, in order to reduce the incidence of problems linked to an incorrect offset, takes a long time to determine it and above all performs numerous tests.

In this situation, the technical task underlying the present invention is to invent a device and a processing procedure of stone material capable of substantially obviating at least part of the aforementioned drawbacks.

Within the scope of said technical task, it is an important object of the invention to obtain a device and a procedure which allows the processing of stone material to be carried out quickly and at low costs.

Another important object of the invention is to provide a device and a procedure which allows a rapid determination of the position of the tools.

The technical task and the specified aims are achieved by a device and a processing procedure of working stone material as claimed in the attached independent claims. Examples of preferred embodiments are described in the dependent claims.

The characteristics and advantages of the invention are clarified below by the detailed description of preferred embodiments of the invention, with reference to the accompanying figures, in which:

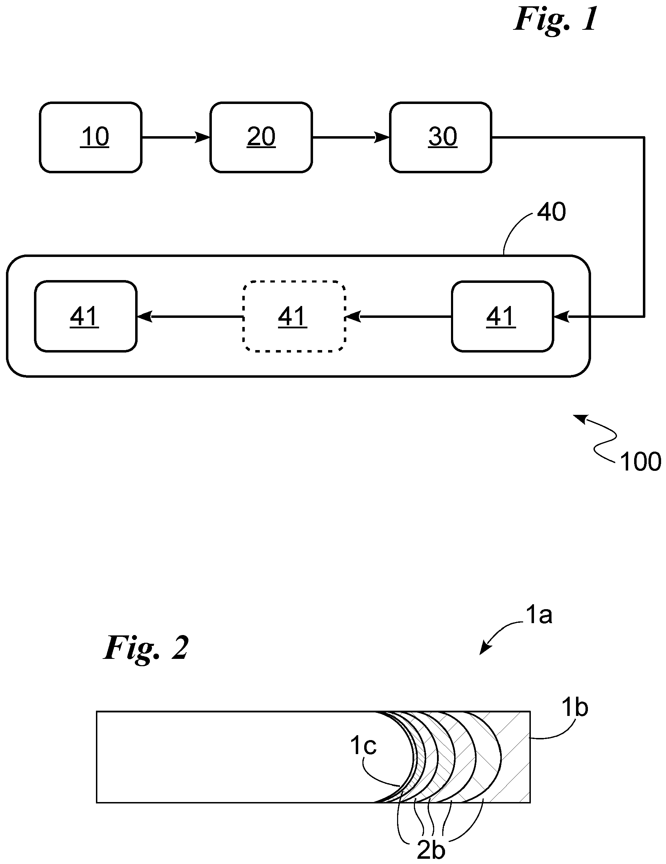

the **Fig. 1** shows a schematic of the processing procedure according to the invention;
the **Fig. 2** illustrates an example of processing;
the **Fig. 3** shows a sequence of the manufacturing process according to the invention.

In the present document, the measurements, values, shapes and geometric references (such as perpendicularity and parallelism), when associated with words like "about" or other similar terms such as "approximately" or "substantially", are to be considered as except for measurement errors or inaccuracies due to production and/or manufacturing errors, and, above all, except for a slight divergence from the value, measurements, shape, or geometric reference with which it is associated. For instance, these terms, if associated with a value, preferably indicate a divergence of not more than 10% of the value.

Moreover, when used, terms such as "first", "second", "higher", "lower", "main" and "secondary" do not necessarily identify an order, a priority of relationship or a relative position, but can simply be used to clearly distinguish between their different components.

The measurements and data reported in this text are to be considered, unless otherwise indicated, as performed in the International Standard Atmosphere ICAO (ISO 2533:1975).

Unless otherwise specified, as results in the following discussions, terms such as "treatment", "computing", "determination", "calculation", or similar, refer to the action and/or processes of a computer or similar electronic calculation device that manipulates and/or transforms data represented as physical, such as electronic quantities of registers of a computer system and/or memories in, other data similarly represented as physical quantities within computer systems, registers or other storage, transmission or information displaying devices.

With reference to the cited Figures, the processing device according to the invention is globally indicated with the number **1.**

The device for processing 1 is configured to remove material from an object **1a** to be processed in stone material which then passes from the initial profile **1b**, or rather the profile of the object 1a before processing, to a final profile **1c**, or rather. the profile that object 1a must have at the end of the processing.

The device for processing 1 comprises a control unit of the device, said final profile 1c associated with the object 1a and preferably the initial profile associated with the object 1a.

The device 1 can comprise an object database associating an initial profile to each object 1a. The object 1a can be identified by means of an object code, for example alphanumeric. The object code can be written on an RFID, a tag, a QR code and / or a bar code.

The device 1 can comprise a database of final profile processing.

The control unit may include an interface configured to allow an operator to enter data and/or view data.

The control unit may comprise a memory.

The final and in particular the initial profile can be stored on the memory. The object database and/or the processing database can preferably be stored on the memory. The control unit is configured to associate a final profile of the processing database with an initial profile and therefore with an object 1a of the object database. Such operation can be automatic and/or manual via interface.

The device for processing 1 comprises a work station of the object 1a.

The work station is configured to allow the control unit to know the position of the object 1a.

In this document, the term "position" identifies the placement, in this case, of the object 1a with respect to an absolute reference system of the device.

The work station is known per se.

The processing device can comprise a plurality of tools **2** configured to process the object 1a when located in the work station; and in some cases, a loading station comprising, for each tool, a storage location for the tools waiting to be used for processing.

The loading station can be of the ATC type of the tool (Automatic Tool Changer) and therefore configured to allow an automatic change. It can be of a known type. Each tool defines a rotation axis **2a.**

Each tool 2 defines a removal thickness **2b.** The removal thickness 2b identifies the thickness value (mostly identifiable a range of values) that the tool 2 can remove, guaranteeing minimum wear and/or maximum processing speed. It can therefore identify a characteristic of the tool 2 usually defined by the manufacturer of the tool itself.

In detail, the device for processing 1 comprises tools 2 with different removal thickness 2b. For example, it can comprise tools 2, usually seven in number, having a removal thickness 2b which decreases progressively from roughing to polishing. Each tool 2 defines a cutting profile, or rather the profile of the tool 2 with respect to the rotation axis 2a and performing the processing. In particular, it defines a current cutting profile **2c**, or rather the cutting profile of the tool 2 before starting the processing.

The current cutting profile 2c can be different from the nominal profile of the tool 2 due to, for example, grinding or wear from previous processing.

The device 1 can comprise a tools database associating a current cutting profile 2c to each tool 2 which can be identified by means of a tool code, for example alphanumeric.

The tools database can be stored in the memory of the control unit.

Each tool 2 can comprise an identifier showing the tool code. Such identifier can be an RFID, a tag, a QR code and/or a bar code.

Alternatively, or in addition, the identifier can be associated with each storage location of the loading station 2a.

The processing device 1 can comprise a reader of said identifier and/or of said object code

The processing device 1 can comprise a movement block configured to allow the tool 2 to perform the processing of said object 1a.

The movement block can comprise a spindle configured to rotate the tool 2 around the rotation axis 2a.

The block is configured to define a relative motion between tool 2 and object 1a by defining the offset between tool 2 and object 1a and preferably by executing the processing.

It can be configured to perform the tool change by taking a tool 2 from the loading station for machining and placing it in said station at the end of the processing. The movement block is configured to allow the control unit to know the position of the tool 2 and in particular of the rotation axis 2a during processing.

The device for processing 1 can comprise a system for acquiring the current cutting profile 2c.

The acquisition system comprises, briefly, a spindle configured to rotate the tool 2 about the rotation axis 2a, a fixed optical reference with respect to the rotation of the tool 2; and a shooting member defining a shooting field inside which both the optical reference and the entire cutting profile of the tool 2 fall so as to perform a shooting of the optical reference and of the entire cutting profile.

The spindle is configured to command a rotation of the tool 2 of at least 360°.

The optical reference can be radial with respect to the rotation axis 2a so as to allow determining the distance of each point of the current cutting profile 2c from the rotation axis 2a. The optical reference is at a known distance from the rotation axis 2a. This distance is stored in the memory of the control unit.

The optical reference can be axial with respect to the rotation axis 2a so as to allow the height of each point of the current profile 2c to be determined along the rotation axis 2a. It can comprise a plurality of mutually spaced teeth, suitably incrementally, along the axis of rotation 2a defining an optical reference in the shape of a comb extending along said axis of rotation 2a.

The shooting member can be optical and defining a shooting field and a barycentric shooting axis of the shooting field preferably substantially perpendicular to the rotation axis 2a.

The camera is in data connection with the control unit. It acquires the current cutting profile 2c and suitably the optical reference; and sends such data to the control unit which can store the current cutting profile 2c associated with the tool 2, preferably by updating the tools database.

The control unit is configured to define (in detail it defines), for each tool 2, the offset as a function of the tool 2 itself (removal thickness 2b and current cutting profile 2c) and of the object 1a (final profile and preferably initial profile) suitably in each section of the object 1a.

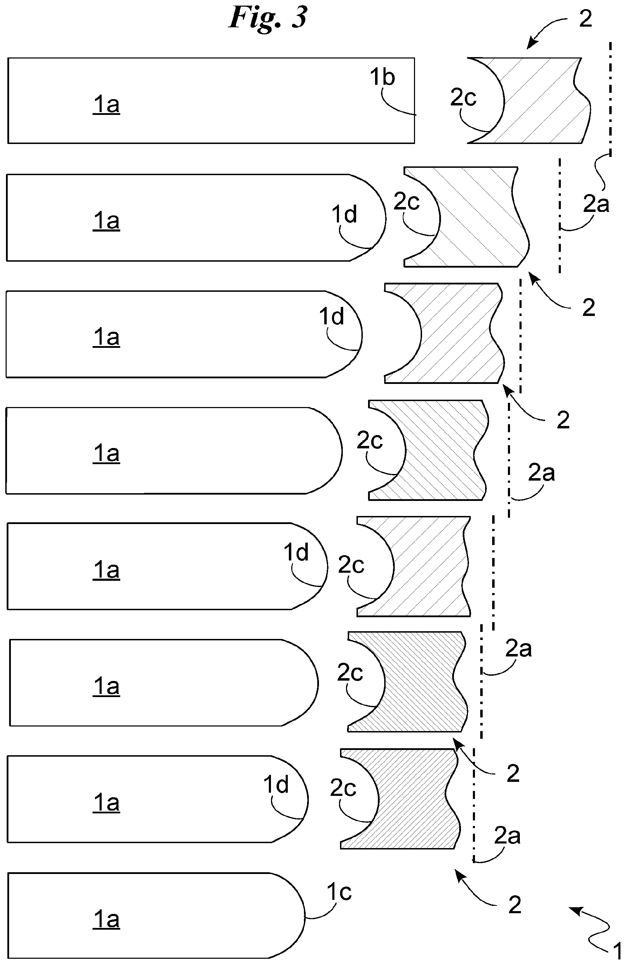

A non-limiting example of offset calculation the control unit, in order to ensure the desired surface finish, the control unit is configured to determine (in detail it determines) the offset of the various tools 2 in incremental order with respect to the removal thickness 2b, or rather by first calculating the offset of tool 2 at minimum removal thickness 2b (for example from the polishing tool). The offset calculation sequence can be as follows: calculation of the offset of tool 2 at minimum removal thickness 2b based on the final profile of the object 1a and the removal thickness 2b and current cutting profile 2c. The offset of the subsequent tools 2, determined in ascending order of removal thickness 2b, is a function of the intermediate profile **1d** of the object 1a (or rather of the final profile added to the removal thickness 2b of the one or more previously estimated tools) and of the removal thickness 2b and current cutting profile of tool 2. It should be noted that the offset of tool 2 at maximum removal thickness is of the intermediate profile 1d of object 1a (suitably added to the removal thickness 2b of one or more previously estimated tools) and the removal thickness 2b and current cutting profile of the tool 2. Fig. 3 shows a sequence of work.

It should be noted that the removal thickness 2b identifies a range of thicknesses and therefore the control unit can determine the offset of the tools as an optimization of the removal thickness 2b and therefore of the processing.

Optionally, the control unit can perform a simulation of the processing by reporting, preferably via the interface (for example thanks to a video display), at least a section of the object 1a illustrating the initial and final profile of the object 1a and the thickness removal of each tool 2.

The operation of the device for processing 1, described above in structural terms, defines a new processing procedure **100** of an object 1a to be processed in stone material.

The processing procedure 100 can comprise a loading phase **10** wherein the object 1a is placed and constrained to the work station.

At the same time, the reader can acquire the object code at the workstation and send it to the control unit.

The loading phase 10 ends by sending the initial profile to the control unit which can thus update the object database.

The processing procedure 100 can comprise an acquisition step **20** wherein an acquisition system acquires the current cutting profile of each tool 2.

In the acquisition step 20 the tool 2, moved for example by the movement block, is placed on the spindle of the acquisition system and then rotated, suitably by at least 360°, around the rotation axis 2a so that the shooting member acquires, preferably optically, the optical reference and the current cutting profile 2c. Once the acquisition is completed, the shooting member sends this data to the control unit.

At the same time the reader can acquire from the identifier the tool code in question at the acquisition system and send it to the control unit.

The acquisition phase 20 can end with the control unit updating the tools database. The processing procedure 100 can comprise an evaluation step **30** wherein the offset is determined for each tool 2 as a function of the removal thickness 2b, of the current cutting profile 2c, of the final profile 1c and suitably of the initial profile 1b.

In this step 30 the control unit acquires the final profile 1b for example through the interface and/or from the processing database; the stock removal thickness 2b and the current cutting profile 2c of each tool for example from the tool database; and suitably the initial profile 1b of the object database.

The evaluation step 30 can be performed by determining the offset of the various tools 2 in incremental order with respect to the removal thickness 2b, or rather by first calculating the offset of the tool 2 at minimum removal thickness 2b as described above.

The evaluation step 30 can be concluded by reporting, preferably by means of an interface (for example by means of video display), a simulation of the processing illustrating at least a section of the object 1a where the initial 1b and final 1c profile of the object 1a and the removal thickness 2b of each tool 2 identified.

In the evaluation step 30 the offset for each point of the initial 1b and/or final 1c profile is determined. Then determining in the evaluation step 30 the trajectory of the reciprocal motion between object 1a and tool 2 is determined and therefore the trajectory to be followed in the processing.

The processing procedure 100 can comprise a processing step **40** wherein the movement block reciprocally moves object 1a and tool 2 according to the offset defined in the evaluation step 20.

The processing step 40 can comprise, for each tool, one removal step **41** characterized by a tool placed, with respect to the object 1a, with the offset determined in the evaluation step 20. In detail, the processing step 40 can comprise a sequence of step 41 wherein the tools are used in order decreasing in removal thickness.

The device for processing 1 and the processing method 100 according to the invention achieve important advantages.

In fact, the device 1 and the processing method 100, by making the calculation of the offset along the entire profile of the object 1a automatic, allow to perform an extremely precise and high-quality processing.

This aspect is due to the fact that, by calculating the offset in each point of the profile, the tool 2 always works in optimal conditions, thus improving the quality of work. This characteristic also allows to avoid particularly stressful conditions for the tool 2 which is therefore not subject to excessive wear and above all less subject to breakage.

Another advantage is represented by the fact that the device 1 and the machining procedure 100, by performing the offset calculation on each point of the tool profile, ensure that each tool removes material from on each point of the tool profile, allowing it to be tool to meet a suitable surface for processing and to have the entire profile of the desired surface finish.

Another advantage is represented by the fact that the automatic calculation of the offset makes the machining particularly fast and efficient" (less removal in fact corresponds to: less wear of the tools; less electrical power consumption of the CNC spindle; higher feed speed of the axes admissible and therefore reduction of the total processing time) and therefore of reduced cost with respect to the known art. The invention is susceptible of variants falling within the scope of the inventive concept defined by the claims. In this context, all the details can be replaced by equivalent elements and materials, shapes and sizes can be any.

## Claims

1. A device for processing (1) an object (1a) made of stone material, comprising:
- a workstation for said object (1a);
- a plurality of tools (2) designed to process said object (1a) in said workstation; each of said tools (2) defining a removal thickness (2b);
- a movement block designed to reciprocally move said object (1a) and said tool (2) enabling said tool (2) to perform said processing;
- a control unit for said movement block;
and **characterised in that** it comprises
- a final profile (1c) of said object (1a);
- a system for acquiring the current cutting profile (2c) of each of said tools (2);
and **in that**
- said control unit configured to define, for each of said tools (2), an offset between said object (1a) and said tool (2) according to said final profile (1c), said removal thickness (2b) and the current cutting profile (2c); and
- wherein said movement block is designed to mutually move said object (1a) and said tool (2) by defining said offset between said tool (2) and said object (1a).

2. The processing device (1) according to claim 1, comprising an initial profile (1b) of said object to be processed; wherein said control unit defines, for each of said tools (2), an offset between said object (1a) and said tool (2) according to said initial profile (1b), said final profile (1c), of said removal thickness (2b) and of said current cutting profile (2c).

3. The processing device (1) according to at least one previous claim, wherein said control unit determines said offset of said tools (2) in incremental order in relation to said removal thickness (2b).

4. The processing device (1) according to at least one previous claim, wherein said acquisition system comprises a spindle designed to rotate the tool (2) about a rotation axis (2a) for at least 360°; an optical reference fixed in relation to said rotation of said tool (2); and a filming device defining a filming range within which said optical reference and said cutting profile of said tool fall (2).

5. A processing procedure (100) of an object (1a) made of stone material comprising:
- a workstation for said object (1a);
- a plurality of tools (2) designed to process said object (1a) in said workstation; each of said tools (2) defining a removal thickness (2b) representing the thickness that said tool (2) can remove;
- a movement block designed to reciprocally move said object (1a) and said tool (2) performing said processing;
- a control unit for said movement block;
and **characterised in that** it comprises
- a final profile (1c) of said object (1a);
- an acquisition step (20) wherein an acquisition system acquires said current cutting profile (2c) of each of said tools (2);
- an evaluation step (30) wherein, for each of said tools (2), an offset between said object (1a) and said tool (2) is determined according to said final profile (1c), said removal thickness (2b), and the current cutting profile (2c); and
- at least one processing step (4) wherein said movement block reciprocally moves said object (1a) and said tool (2) by defining said offset between said tool (2) and said object (1a).

6. The processing procedure (1) according to the previous claim, comprising an initial profile (1b) of said object (1a); wherein in said evaluation step (30) said control unit defines, for each of said tools (2), said offset according to said initial profile (1b), said final profile (1c), said removal thickness (2b) and said current cutting profile (2c).

7. The processing procedure according to the previous claim, wherein in said evaluation step (30) said offset of said tools (2) can be determined in incremental order in relation to said removal thickness (2b).

8. The processing procedure according to at least one claim 6-7, wherein in said acquisition step (20) a filming device rotates said tool (2) about its rotation axis (2a) by at least 360° and simultaneously acquires said current cutting profile (2c) and an optical reference.

9. The processing procedure according to at least one claim 6-8, wherein in said evaluation step (30) said offset is determined for all said tools (2); and wherein said processing step (40) is carried out only at the end of said evaluation step (30).

10. The processing procedure according to at least one claim 6-9, wherein in said evaluation step (30) said offset is determined for each point of said profile (1b, 1c) and, therefore, the trajectory of said reciprocal motion between said object (1a) and said tool (2) in said processing step (40).

## Amended claims

### Amended claims in accordance with Rule 137(2) EPC.

**1.** A device for processing (1) an object (1a) made of stone material, comprising:
- a workstation for said object (1a);
- a plurality of tools (2) designed to process said object (1a) in said workstation; each of said tools (2) defining a removal thickness (2b);
- a movement block designed to reciprocally move said object (1a) and said tool (2) enabling said tool (2) to perform said processing;
- a control unit for said movement block;
and **characterised in that** it comprises
- a final profile (1c) of said object (1a);
- a system for acquiring the current cutting profile (2c) of each of said tools (2);
and **in that**
- said control unit configured to define, for each of said tools (2), an offset between said object (1a) and said tool (2) according to said final profile (1c), said removal thickness (2b) and the current cutting profile (2c); and
- wherein said movement block is designed to reciprocally move said object (1a) and said tool (2) by defining said offset between said tool (2) and said object (1a);

**2.** The processing device (1) according to claim 1, comprising an initial profile (1b) of said object to be processed; wherein said control unit defines, for each of said tools (2), an offset between said object (1a) and said tool (2) according to said initial profile (1b), said final profile (1c), of said removal thickness (2b) and of said current cutting profile (2c).

**3.** The processing device (1) according to at least one previous claim, wherein said control unit determines said offset of said tools (2) in incremental order in relation to said removal thickness (2b).

**4.** The processing device (1) according to at least one previous claim, wherein said acquisition system comprises a spindle designed to rotate the tool (2) about a rotation axis (2a) for at least 360°; an optical reference fixed in relation to said rotation of said tool (2); and a filming device defining a filming range within which said optical reference and said cutting profile of said tool fall (2).

**5.** A processing procedure (100) of an object (1a) made of stone material comprising:
- a workstation for said object (1a);
- a plurality of tools (2) designed to process said object (1a) in said workstation; each of said tools (2) defining a removal thickness (2b) representing the thickness that said tool (2) can remove;
- a movement block designed to reciprocally move said object (1a) and said tool (2) performing said processing;
- a control unit for said movement block;
and **characterised in that** it comprises
- a final profile (1c) of said object (1a);
- an acquisition step (20) wherein an acquisition system acquires said current cutting profile (2c) of each of said tools (2);
- an evaluation step (30) wherein, for each of said tools (2), an offset between said object (1a) and said tool (2) is determined according to said final profile (1c), said removal thickness (2b), and the current cutting profile (2c); and
- at least one processing step (4) wherein said movement block reciprocally moves said object (1a) and said tool (2) by defining said offset between said tool (2) and said object (1a); **and**

**6.** The processing procedure (1) according to the previous claim, comprising an initial profile (1b) of said object (1a); wherein in said evaluation step (30) said control unit defines, for each of said tools (2), said offset according to said initial profile (1b), said final profile (1c), said removal thickness (2b) and said current cutting profile (2c).

**7.** The processing procedure according to the previous claim, wherein in said evaluation step (30) said offset of said tools (2) can be determined in incremental order in relation to said removal thickness (2b).

**8.** The processing procedure according to at least one claim 6-7, wherein in said acquisition step (20) a filming device rotates said tool (2) about its rotation axis (2a) by at least 360° and simultaneously acquires said current cutting profile (2c) and an optical reference.

**9.** The processing procedure according to at least one claim 6-8, wherein in said evaluation step (30) said offset is determined for all said tools (2); and wherein said processing step (40) is carried out only at the end of said evaluation step (30).

**10.** The processing procedure according to at least one claim 6-9, wherein in said evaluation step (30) said offset is determined for each point of said profile (1b, 1c) and, therefore, the trajectory of said reciprocal motion between said object (1a) and said tool (2) in said processing step (40).

**1.** A device for processing (1) an object (1a) made of stone material, comprising:
- a plurality of tools (2) designed to process said object (1a) in said workstation; each of said tools (2) defining a removal thickness (2b);
- a movement block designed to reciprocally move said object (1a) and said tool (2) enabling said tool (2) to perform said processing;
- a control unit for said movement block;
- a workstation for said object (1a) configured to allow said control unit to know the position of said object (1a);
and **characterised in that** it comprises
- a final profile (1c) of said object (1a);
- a system for acquiring the current cutting profile (2c) of each of said tools (2);
- an initial profile (1b) of said object to be processed
and **in that**
- said control unit configured to define, for each of said tools (2), an offset between said object (1a) and said tool (2) according to said final profile (1c), said removal thickness (2b) and the current cutting profile (2c); and
- wherein said movement block is designed to reciprocally move said object (1a) and said tool (2) by defining said offset between said tool (2) and said object (1a);
- said control unit defines, for each of said tools (2), an offset between said object (1a) and said tool (2) according to said initial profile (1b), said final profile (1c), of said removal thickness (2b) and of said current cutting profile (2c).

**2.** The processing device (1) according to claim 1, wherein said control unit determines said offset of said tools (2) in incremental order in relation to said removal thickness (2b).

**3.** The processing device (1) according to at least one previous claim, wherein said acquisition system comprises a spindle designed to rotate the tool (2) about a rotation axis (2a) for at least 360°; an optical reference fixed in relation to said rotation of said tool (2); and a filming device defining a filming range within which said optical reference and said cutting profile of said tool fall (2).

**4.** A processing procedure (100) of an object (1a) made of stone material comprising:
- a plurality of tools (2) designed to process said object (1a) in said workstation; each of said tools (2) defining a removal thickness (2b) representing the thickness that said tool (2) can remove;
- a movement block designed to reciprocally move said object (1a) and said tool (2) performing said processing;
- a control unit for said movement block;
- a workstation for said object (1a) configured to allow said control unit to know the position of said object (1a);
and **characterised in that** it comprises
- a final profile (1c) of said object (1a);
- an acquisition step (20) wherein an acquisition system acquires said current cutting profile (2c) of each of said tools (2);
- an initial profile (1b) of said object (1a);
- an evaluation step (30) wherein, for each of said tools (2), an offset between said object (1a) and said tool (2) is determined according to said final profile (1c), said removal thickness (2b), and the current cutting profile (2c); and
- at least one processing step (4) wherein said movement block reciprocally moves said object (1a) and said tool (2) by defining said offset between said tool (2) and said object (1a); and
- wherein in said evaluation step (30) said control unit defines, for each of said tools (2), said offset according to said initial profile (1b), said final profile (1c), said removal thickness (2b) and said current cutting profile (2c).

**5.** The processing procedure according to the previous claim, wherein in said evaluation step (30) said offset of said tools (2) can be determined in incremental order in relation to said removal thickness (2b).

**6.** The processing procedure according to the previous claim, wherein in said acquisition step (20) a filming device rotates said tool (2) about its rotation axis (2a) by at least 360° and simultaneously acquires said current cutting profile (2c) and an optical reference.

**7.** The processing procedure according to at least one claim 5-6, wherein in said evaluation step (30) said offset is determined for all said tools (2); and wherein said processing step (40) is carried out only at the end of said evaluation step (30).

**8.** The processing procedure according to at least one claim 5-7, wherein in said evaluation step (30) said offset is determined for each point of said profile (1b, 1c) and, therefore, the trajectory of said reciprocal motion between said object (1a) and said tool (2) in said processing step (40).
